# EUROPEAN PATENT APPLICATION

(11) **EP 3 287 858 A1**
(43) Date of publication of application: **28.02.2018**
(21) Application number: 16185260.3
(22) Date of filing: 23.08.2016
(51) Int. Cl.: G05B 19/418, G06F 9/44, G06F 9/54

(54) **EXTENDING MES FUNCTIONALITIES IN A BUS-BASED ARCHITECTURE**

(71) Applicant: Siemens Aktiengesellschaft, 80333 München (DE)
(72) Inventor: OLMINO, Paolo, 16151 Genova (IT); LOMBARDI, Paolo, 55032 Castelnuovo di Garfagnana (LU) (IT)
(74) Representative: Maier, Daniel Oliver

(57) **Abstract**

The invention relates to a process to extend a functionality of a Manufacturing Execution System (MES) in a computer managed Manufacturing Execution System (MES) based on a bus architecture for controlling discrete production lines and/or automotive industries, wherein the MES functionality is implemented in a domain (1) including at least a MES entity with a command, the domain (1) being programmed to communicate to at least another domain (2) of the MES System through a bus of said bus based architecture. The process includes the steps of: selecting the MES entity and command implementing the functionality to be extended; transforming the selected commands into a method; extending the MES entity and the method which implement the selected functionality, to obtain an extended MES entity and an extended method, corresponding to the extended functionality, registering into said bus a first handler of the method including a lineage of the MES entity and a second handler of the method including a lineage of the extended MES entity, or a lineage of the MES instance instantiated from said MES entity and said extended MES entity; wherein said communication of said domain with at least another domain through the bus is made delivering a message on the bus including the method and the corresponding MES entity or extended MES entity, or instance derived therefrom, and wherein the bus selects the first handler, for executing the functionality, or the second handler, for executing the extended functionality, based on a mapping between the lineage registered in the bus and a lineage derived from said message in the bus.

## Description

The present invention relates to a process and to a system to extend MES functionalities in a bus-based architecture according to the preamble of the independent claims.

As known, a manufacturing execution system, MES, is an information technology (IT) layer that integrates business systems (e.g. ERP) and production control systems of a manufacturing organization. MES drives effective execution of manufacturing operations, by managing production operations from point of order release to manufacturing, to product delivery into finished goods, and by providing information about production activities across the manufacturing organization and supply chain.

The MES functionalities, consisting of several different business components or business services, are implemented in "domain" of a domain driven design architecture ("Domain-Driven Design", Evans, Eric (FRW)).

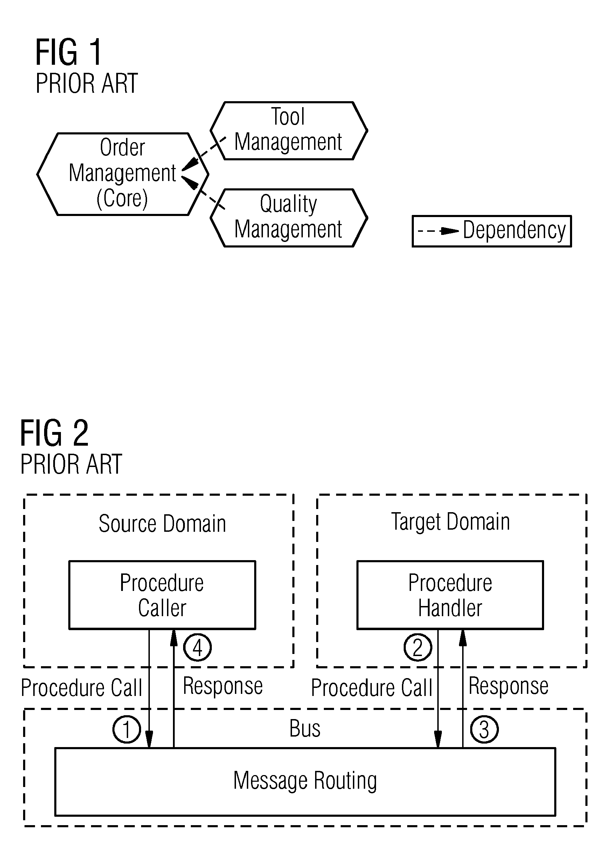

Figure 1 schematically exemplifies three domains: a first domain, defining a core domain for Order Management, and a second and a third domain, defining two peripheral domains or bounded contexts, Tool Management and Quality Management, respectively. Each domain interacts with other domains and collaborate to control the production and to account for it. Other domains can be added to expand the interaction of the core domain and the peripheral domains to other components.

Preferably, to implement the MES, inversion of control principle is used ("Inversion of Control Containers and the Dependency Injection Pattern", Fowler, Martin). According to this principle, peripheral domains (second and third domains of figure 1) are aware of the core domain (first domain of figure 1) but the core domain or pre-existing domains are not aware by the peripheral domains. Inversion of control is preferred for MES implementation since custom-written portions of the code in a domain receive the flow of control from a framework, differently from what happens in traditional programming, where it is the custom code that expresses the purpose of the program calls into reusable libraries to take care of generic tasks. Inversion of control increases modularity and extensibility, which is highly desirable in MES system, due to its complexity and needing to evolution/adaptation.

In this respect, however, modularity and extensibility are limited also when inversion of control is used in MES, since domains are mutually interconnected and bundled together, and the high number of interconnections between domains determines complexity in functional design and in source code, as well as in code maintenance. In this respect, the operation of the domains is stored in data organized in logical entities, also known as MES entities, bound by a plurality of relationships. When an event occurs in a domain, the MES entities needed to react to said event are read.

In order to simplify complexity in functional design and in source code, as well as in the code maintenance, and to better fit the needs of specific plants, known bus based architecture is used. With the bus based architecture, data of MES entities shared among the domains are transformed from a first data model used in a database into a second data model and the bus is arranged to communicate with all domains. At run time, domains interact with one another through the bus to control the production line.

For instance with reference to figure 2, a source domain and a target domain are represented. Inter-domain communications, such as Remote Procedure Calls, are out-of-process for scalability and maintainability, so they call for the bus in the dashed rectangles to convey calls to other domains (components). In presence of said bus, which is an interprocess bus, a common Remote Procedure Call consists of these steps:
1. Procedure Call is submitted to the bus;
2. The bus routes the Procedure Call to the single Procedure Handler registered to process it;
3. The Procedure Handler emits a response when the request has been fulfilled;
4. The caller receives the response.

The bus is a software engine implementing the procedural dependencies between domains in an event-oriented manner: that is, instead of having routines that call other routines or subroutines, there are dependencies from events. Bus receives events and dispatches them to the appropriate domains. For each domain, adapters (not represented in figure 2) adapt the event to the protocol used by the different domains.

Accordingly, with the bus based architecture, direct communication between domains is avoided and a certain degree of reduction in complexity in the MES is obtained.

However, the bus based architecture of this type is not adapted to overcome other problem associated to extension or specialization of domains. Indeed, domains may need to be fine-tuned or modified for functional or infrastructural needs due to evolution of the manufacturing organization. On the other hand, the core domains may need to be extended or specialized, due a corresponding specialization of the manufacturing organization.

Two use cases "1" and "2", presented here below, represent this scenario and the problem of extending or specializing a domain.

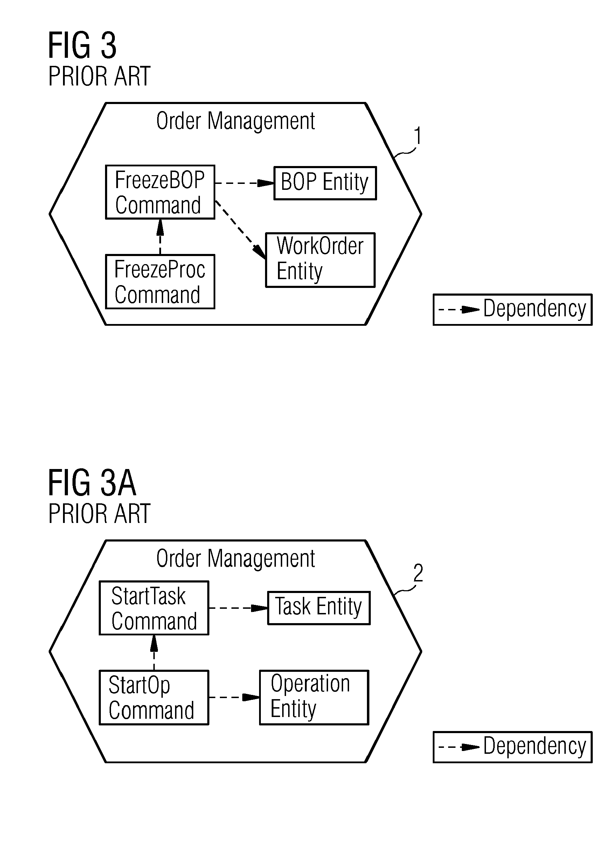

The first use case is schematically represented in figure 3: a domain 1 (core domain) in a composite architecture deals with production order management; domain 1 checks some security constraints and instantiates (freezes) the structure of a production order (WorkOrder Entity) starting from a bill of process (BOP Entity) using a FreezeBOP Command. In this use case, problems arise when properties are added to the BOP Entity, since it is desirable to modify the behavior (functionalities) of the FreezeBOP command so that it also declare the new properties of the BOP entity in the new WorkOrder Entity, but this is not possible because the framework still relate to the unmodified BOP Entity when the FreezeBOP command is recalled.

The second use case is schematically represented in figure 3a: a domain 2 (core domain) in a composite architecture deals with production order management, in particular, an Operation Start command (StartOp command) checks some security constraints and sets the status of all tasks contained in the production operation to Active.

In this second case, another problem arises when a new Task Entity dedicated to the automatic start of some device is added: when the containing operation is started, the task will call specific logic to carry out the tool activation after the default behavior of setting the status of the task to Active. This is due to the fact that the Operation start command recalled by the framework is not aware of the presence of the new Task Entity.

Moreover, there are scenarios where use case "1" and use case "2" are independently encountered (either separately or simultaneously) and must be solved.

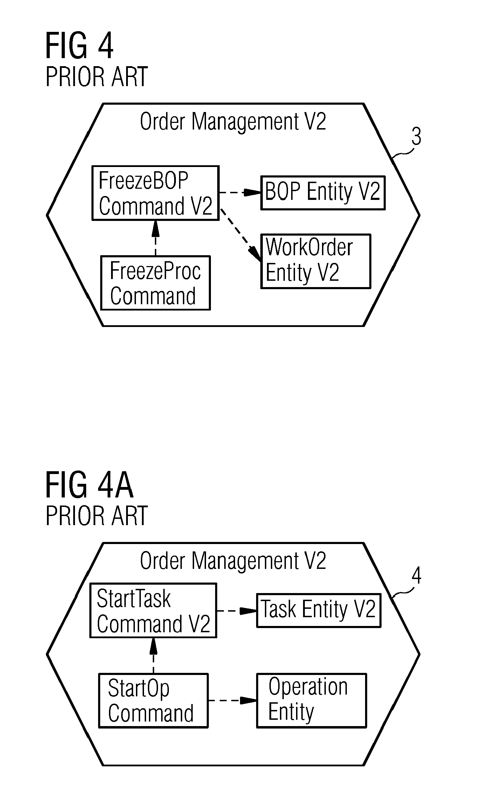

The way to extend the MES functionalities in the above mentioned uses cases "1" and "2" according to the prior art bus based architecture is represented in figure 4 and 4a.

A newer version of the domains, corresponding to the core domains 1 and 2 of figure 3 and 3a, respectively, is given, as schematically represented in figure 4 and 4a with MES domains 3 and 4. In other words, adaptation of the MES functionality is made by implementing both the old logics (domains 1, 2) and the new logics (and domains 3, 4). According to this approach, extension of domains 1 and 2 is made by rewriting, which does not overcome the problem of simplifying complexity and maintenance of the system and code. Indeed, no environment is available in the bus based architecture to provide default domains, other than substituting a default port/adapter, and no technique to extend partially or completely domains; just adapters and ports can be added, replaced or removed from the overall scenario.

On the other hand, a framework known in the prior art, allows to design domains in terms of entities, commands and events. In such a framework, functional blocks model bounded domains, so that they can provide a basis for the next implementations. For example, a Discrete Library functional block can serve as a base for a Mechatronic (i.e. Mechanical + Electronic) Functional Block, which in turn can be the base for a specific project. However, also this known framework is limited when extension of a MES functionality is required, since it just allows to extend properties of the entity while commands and events cannot be extended. Hence the only way offered to extend MES functionalities is that of implementing brand new command and event handlers and changing the existing software to call the new commands and handlers.

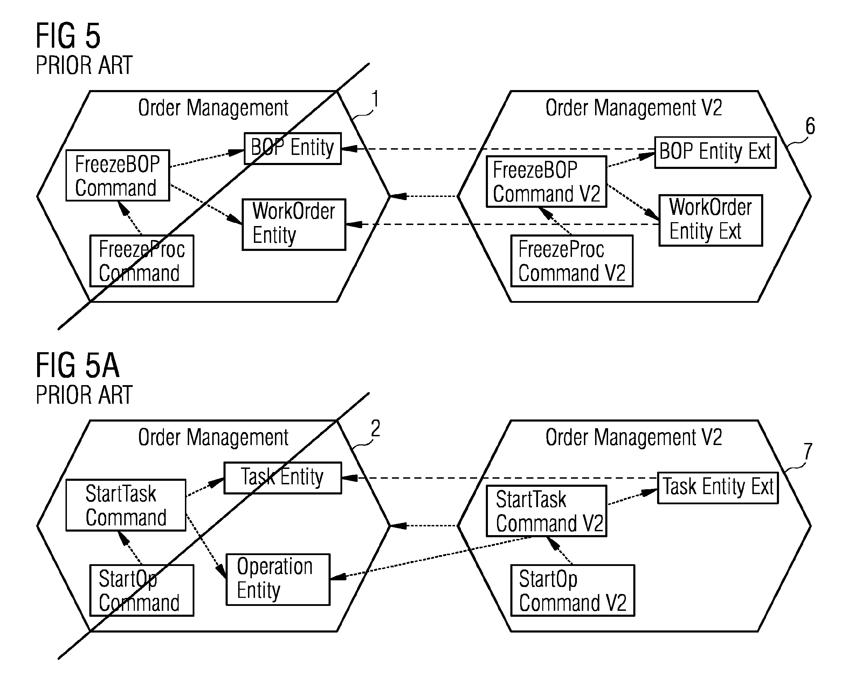

Figures 5 and 5a schematically represent how in the known framework the MES is adapted to support extensions of MES functionalities in the above mentioned uses cases "1" and "2": domains 6 and 7 are developed, which extends the modified entities in old domain 1 and 2, and also new commands are developed, containing both old and new behaviors (functionalities). The old domains must not be called anymore, they just provide a basis for the new domains 6 and 7.

As far as command are concerned, the prior art method based on bus architecture relies on a routing which delivers the command call to the one command handler registered to the purpose. For example, in use case "1", the command call FreezeBOP contains the BOP ID and the Work Order ID on which the command must be performed, and is presented to the bus with a routing key of the type "FreezeBOP" to the bus. The bus activates the only command handler registered for "FreezeBOP" to accept that exact routing key. In use case "2", the command call StartOp contains the Operation ID on which the command must be performed, and is presented to the bus with a routing key of the type "StartOp". The bus activates the only command handler registered in association with "StartOp" to accept that exact routing key. Inside the code of the StartOp command handler, for each task in the operation, a command call StartTask containing the Task ID on which the command must be performed is presented with a routing key of the type "StartTask" to the bus. The bus activates the only command handler registered with a topic "StartTask" to accept that exact routing key.

Due to the above limitations, the methods to extend MES functionalities according to the prior art suffer for the following drawbacks.

Function based design: the software tools used to design MES based on bus architecture do not offer the possibility to design object oriented features, so the software engineer must be aware of these limitation not to design unsupported patterns.

Dependency hell: all unchanged commands, in any domain, which depended on the old functionalities, for instance on the FreezeBOP in the example given above (e.g. FreezeProc Command), will start the new logic contained in the latter version by calling the newer command; to avoid this, all dependent code must be reworked.

Code reduplication and dead code: if the base code, e.g. based on behavior (functionalities) regarding the security constraints, common to the two versions, changes, the code will have to be modified on the two versions. Otherwise, if Version 1 code is not useful anymore, for instance in case of obsolescence, it will be still present but not used in subsequence builds.

Opaque function calls: the domains invoking the FreezeBOP command call will have to make sure to align all versions of commands and entities, since they only have evidence of the command call isolated interface.

Cyclomatic complexity: since some scenarios require the developer to write newer or specialized code next to existing code, if behaviors (functionalities) must be extended more than once, all combination must be accounted for, calling for a complex set of nested conditions. For different reasons, the developers will have to modify the same section of code.

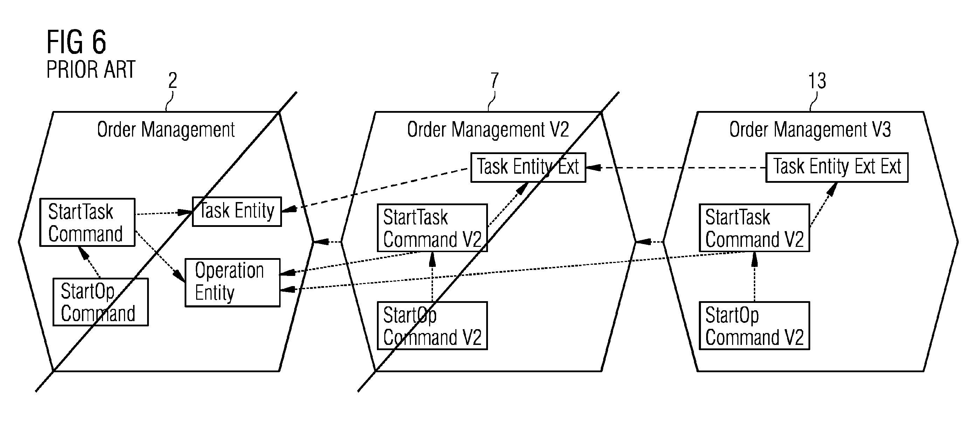

Figure 6 schematically represents the core base domain overridden by two peripheral domains, according to the prior art.

The technical problem at the base of the present invention is supporting extensions and/or specialization of MES functionalities in a bus based architecture, in particular supporting such specializations using Object Oriented Programming, reducing complexity in functional design and in source code, as well as in code maintenance, avoiding code reduplication or dead code, simplifying dependencies, and integration of new domain with previous or pre-existing domains.

According to the present invention, the above mentioned technical problem is solved by a process to extend a functionality of a Manufacturing Execution System (MES) in a computer managed Manufacturing Execution System (MES) based on a bus architecture for controlling discrete production lines and/or automotive industries, wherein the MES functionality is implemented in a domain including at least a MES entity and a command, the domain being programmed to communicate to at least another domain of the MES System through a bus of said bus based architecture, characterized by:
- selecting the MES entity and command implementing the functionality to be extended;
- transforming the selected commands into a method;
- extending the MES entity and the method which implement the selected functionality, to obtain an extended MES entity and an extended method, corresponding to the extended functionality,
- registering into said bus a first handler of the method, in association with a lineage of the MES entity, and a second handler of the method, in association with a lineage of the extended MES entity, or a lineage of the MES instance instantiated from said MES entity and said extended MES entity;
   wherein said communication of said domain with at least another domain through the bus includes delivering from a domain a message on the bus including a name of the method and the MES entity or the extended MES entity, or instance derived from the MES entity or the extended MES entity, and wherein
   the bus selects the first handler for executing the functionality or the second handler for executing the extended functionality, based on a mapping between the lineage registered in the bus for the first and second handlers and a lineage derived from said message in the bus.

Here above, and in the following description, the term "method" is used to relate to the "method" of a class or instance in Object oriented programming.

Moreover, the word "extension" of MES functionality also cover "specialization" of MES functionality, given that the same steps of the process of the present invention may be executed to implement an extension or a specialization of commands available inside one or more domains of the MES, i.e. advantageously supporting both the uses cases "1" (extension) and "2" (specialization) modification in an object oriented environment.

The step of registering the lineages into the bus comprises storing, in association with the first handler, a first string containing, for instance through a concatenation by a special character, the name of the method and the name of the MES entity, and, in association with the second handler, a second string containing, for instance through a concatenation by the special character, said name of the method with the name of the MES entity and with the name of the extended MES entity.

The step of deriving the lineage from said message in the bus comprises forming a topic string obtained by:
- deriving the MES entity from the extended MES entity and forming the topic string by concatenating recursively in the bus the name of the MES entity with the name of the extended MES entity and the name of the method, if said message includes the extended MES entity;
- forming the topic string by concatenating in the bus the name of the MES entity with the name of the method, if said message includes the MES entity.

The process may include the step of further extending one or more time said extended MES entity and said method, to obtain a further extended functionality,
- wherein said step of registering registers a further handler of the method including a lineage of the further extended MES entity or instance instantiated therefrom; and
- wherein said communication is made delivering on the bus the message including the method and the further extended class or instance derived therefrom, and wherein the bus selects the further handler when the lineage registered in the bus for the further handler is mapped to a lineage derived from the message in the bus.

The step of registering the handlers of the method in the bus includes:
- storing the first string and the second string (or further strings), as a first and second routing key (respectively, further routings keys), in a routing table of said bus;
- mapping the first and second key to the first and second handlers, respectively, and wherein
   said step of mapping the lineage registered in the bus for the method and a lineage derived from said message in the bus comprises the step
   finding the routing key in the routing table having the longest lexicographic similarity with the topic string.

The routing table includes at least two interfaces, including:
- an interface "Add functionality" to register an handler in the routing table;
- an interface "Route functionality" to map a routing key to the handler, wherein the "Route functionality" returns the handler associated to the routing key matching the lineage derived from said message in the bus, by means of the following steps:
   - selecting from the routing table all the routing keys starting with letters corresponding to the name of the method in said message;
   - among the selected routing keys, finding the deeper routing key, wherein a routing key is deeper than another routing key among the selected routing keys when the routing key includes more MES entities concatenated with said special character than the another routing key, said deeper routing key corresponding to the most extended functionality;
   - returning the handler associate to the deeper routing key.

Each of said domains is a domain of a domain driven architecture.

In an aspect of the present invention, the domain driven architecture includes a plurality of servers, each server implementing one of said domain and communicating to other servers through the bus.

Each of said domain belong to a first layer of the domain driven architecture and the bus belong to a second layer at a lower level in said domain driven architecture with respect to the first layer, wherein the second layer includes the handlers of the methods and the message is delivered to the bus from the first layer being unaware of the handler.

Each MES entity and method are implemented in a class of an object oriented programming language and the instantiated MES entity is an instance instantiated from said class, the communication on the bus is by means of a virtual method, when the message includes the MES entity, or by means of a non-virtual method, when the message includes the instance instantiated from the MES entity.

The technical problem identified above is also solved by a system to extend a functionality of a Manufacturing Execution System (MES) in a computer managed Manufacturing Execution System (MES) based on a bus architecture for controlling discrete production lines and/or automotive industries, wherein the MES functionality is implemented in a domain including at least a MES entity and a command, the domain being programmed to communicate to at least another domain of the MES System through a bus of said bus based architecture, characterized by including:
- means to store a method corresponding to a command implementing the functionality to be extended in said MES entity;
- means to store an extended MES entity and an extended method implementing the extended functionality,
- a memory in bus storing a first handler of the method including a lineage of the MES entity and a second handler of the extended method including a lineage of the extended MES entity, or a lineage of the MES instance instantiated from said MES entity and said extended MES entity;

- an input interface of said bus adapted to receive from said domain a message including the method and the corresponding MES entity or extended MES entity, or instance derived therefrom, for driving the communication of the domain with another domain;
- a selector in the bus adapted to select the first handler, for executing the functionality, or the second handler, for executing the extended functionality, based on a mapping between the lineage registered in the bus and a lineage derived from said message in the bus.

The problem is also solved by a computer program element, comprising computer program code for performing steps according to the above process when loaded in a digital processor of a computing device.

Furthermore, a computer program product stored on a computer usable medium, comprising computer readable program code for causing a computing device to perform the process is also adapt to solve the mentioned technical problem.

The invention will now be described in preferred but not exclusive embodiments with reference to the accompanying drawings, wherein:
Figure 1 schematically represents three MES components with corresponding dependency.
Figure 2 schematically represents a bus based architecture.
Figure 3 schematically represents a MES component with commands and entities.
Figure 3a schematically represents another MES component with commands and entities.
Figure 4 schematically represents an extension of the MES component of figure 3, according to a prior art process.
Figure 4a schematically represents an extension of the MES component of figure 3a, according to the prior art process of figure 4.
Figure 5 schematically represents an extension of the MES component of figure 3, according to another prior art process.
Figure 5a schematically represents an extension of the MES component of figure 3a, according to the prior art process of figure 5.
Figure 6 schematically represents a further extension of the MES component of figure 5a, according to the prior art process of figure 5a.
Figure 7 schematically represents the MES component of figure 3, programmed according to the process of the present invention.
Figure 7a schematically represents the MES component of figure 3a, programmed according to the process of the present invention.
Figure 8 schematically represents an extension of the MES component of figure 7, according to the process of the present invention.
Figure 8a schematically represents an extension of the MES component of figure 7a, according to the process of the present invention.
Figure 9 schematically represents a user interface to model methods according to the present invention.
Figure 10 schematically represents a class lineage of a LegacyQualityTask.
Figure 11 is a block diagram to evaluate the lineage of a type t.
Figure 12 a class diagram for a priority routing table.
Figure 13 is a flow chart for the priority routing table.
Figure 14 is an exemplification of Sequence Diagrams for Priority Routing Table Add.
Figure 15 is an exemplification of Sequence Diagrams for Priority Routing Table Route.
Figure 16 is a simplified version of figures 8, 8a.
Figure 17 schematically represents a further extension of the MES component of figure 8a overridden by two object oriented peripheral domains (MES components), according to the process of the present invention, based on object oriented programming.

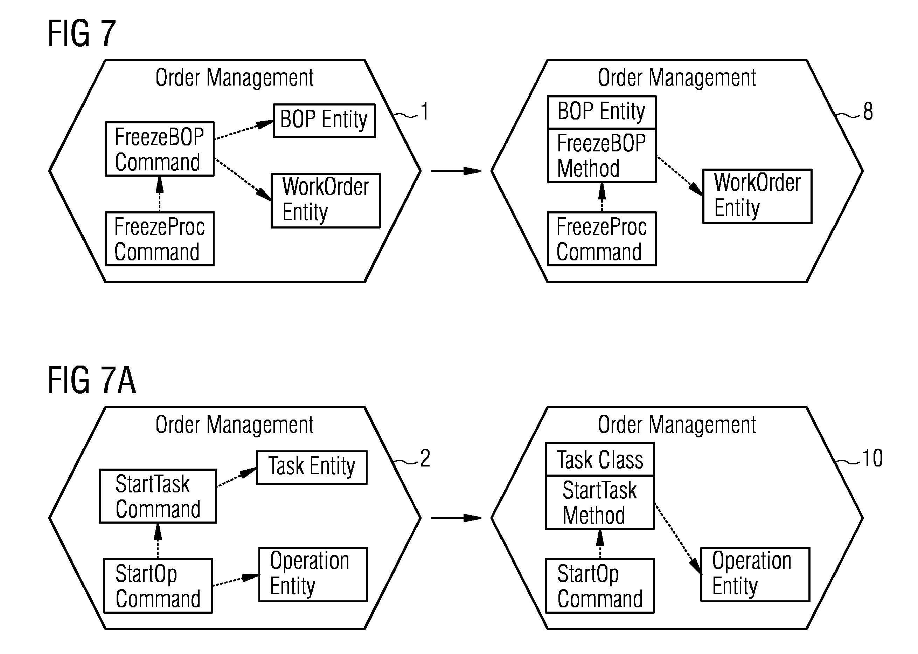

With reference to figure 7-17, it is hereafter described an example of implementation of a process and a system to extend MES functionalities in a bus-based architecture according to the present invention.

The manufacturing execution system, MES, is an information technology (IT) layer that integrates business systems (e.g. ERP) and production control systems of a manufacturing organization. MES drives effective execution of manufacturing operations, by managing production operations from point of order release to manufacturing, to product delivery into finished goods, and by providing information about production activities across the manufacturing organization and supply chain.

In the MES, the MES functionalities are implemented in "domain" of a domain driven design architecture. The operation of the domains is stored in data organized in logical entities, also referred by 'MES entities', bound by a plurality of relationships. When an event occurs in a domain, the MES entities needed to process it are read. The interaction among domain is based on the bus based architecture. For instance, data of MES entities shared among the domains are transformed from a first data model used in a database into a second data model and the bus is arranged to communicate with all domains. At run time, domains interact with one another through the bus to control the production line.

A computer managed MES according to the process of the present is particularly adapted for controlling manufacturing processes in discrete production lines and automotive industries, for instance automotive assembly lines including a plurality of stations where operations are performed. In automotive assembly lines, for each station, one or more workplaces are configured, each containing the configuration for production operations. At runtime, each workplace contains a vehicle or a part thereof, represented by its production order, wherein each production order contains the actual operations that must be performed on the vehicle. Operator terminals at each workplace may show the operations of the production order that are associated with the workplace, their status and other relevant information. Among the functionalities that MES includes are resource allocation and status, dispatching production orders, data collection/acquisition, quality management, maintenance management, performance analysis, operations/detail scheduling, document control, process management and product tracking.

The bus is a software engine implementing the procedural dependencies between domains in an event-oriented manner. In other words, instead of having routines that call other routines or subroutines, there are dependencies among events. Bus receives events or messages and dispatches them to the appropriate domains. For each domain, an adapters adapt the event (or message) to the protocol used by the different domains. The bus based architecture allows avoiding direct communication between domains and a certain degree of reduction in complexity is obtained by delegating the inter-domain communication to a lower level which is implemented by the bus.

Inter-domains communications through the bus is improved to support fine-tuning of domains or modification thereof, for functional or infrastructural needs due to evolution of the manufacturing organization, as well as supporting extension or specialization of domains, due a corresponding extension or specialization of the manufacturing processes in the organization.

The process is adapted to be applied to a composite architecture where different domains interact by means of a layer based on a bus architecture. When a domain needs to perform a "Remote Procedure Call", the bus notifies all the domains that a task must be performed (the procedure call) and the single domain capable of executing the task executes it transactionally, i.e. based on a procedure handling. Simatic IT UAF of Siemens Corp. may be used as a base for the above mentioned composite architecture. Simatic IT UAF is adapted to manage events which are routed to more than one destination MES component (domain) in a non-transactional way.

According to the process of the present invention, also a transactional execution is supported. Therefore, Simatic IT UAF may be adapted to implement a transitional execution and to support both non-transactional execution and transactional executions.

More particularly, still according to the present invention, Object Oriented Programming is applied to the bus based architecture.

In order to extend the domains according to the process of the present invention, the following steps are executed:
a) Identifying commands (for instance commands represented in figure 3, 3a of the prior art) bound to the semantics of an existing entity and transform these commands into method of an object oriented class.
   The transformation from commands to method is made also because, advantageously, methods can be invoked also virtually (https://en.wikipedia.org/wiki/Virtual function).
b) Leave the command and entity with no logical connection unchanged. With reference to figure 7 and 7a, for instance, this happens for command FreezeProc and WorkOrder (figure 7) and StartOp and Operation Entity (figure 7a).

The above operations a) and b) are also indicated as Object Oriented refactoring and allows to transform the domain of figure 3 and 3a into domains 7, 7a respectively.

When needs arise to extend the classes/entities contained in the existing domains 7, 7a the following steps are executed:
c) Identifying the class to be extended;
d) Extend the relevant parts, including properties or methods.

For example, instead of domains 3, 4 obtained as extension of domains 1, 2 according to the prior art process represented in figures 4, 4a and instead of domains 6, 7 obtained as extension of class 1, 2 according to the other process disclosed by the prior art and described with reference to figures of 5, 5a, according to the process of the present invention, domains 9, 11 are the result of the extension of domains 8, 10 obtained by Object oriented refactoring of domains 1,2.

A graphic user interface is provided to support introduction of methods call. For instance, starting from a Graphic User Interface already available in Simatic IT UAF, which allows a developer to define entities with properties, the Graphic User Interface is adapted to allow the developer to add method calls, preferably including the following features:
- Feature to define methods on an existing entity/class by means of a keyboard or a mouse;
- Feature to visualize entities/class methods together with properties on a canvas.

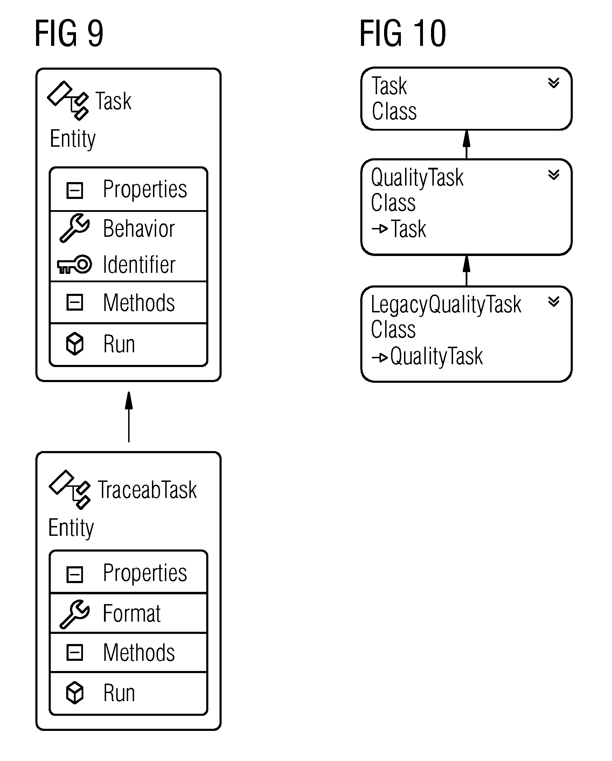

Figure 9 is an example of a Graphic User Interface to model methods according to an aspect of the process of the present invention.

In order to support the extension of the MES functionality, the following steps are also provided:
- Enabling or developing a routing capable of delivering method calls, preferably including the following methods:
   * Method Handlers topic: "<MethodName>.<EntityLineage>.#"
   * Virtual Method Calls routing-key: "<MethodName>.<InstanceLineage>."
   * Non-Virtual Method Calls routing-key: "<MethodName>.<EntityLineage>.": non-virtual calls are a device to avoid the advanced behavior (functionality) and would usually be avoided.

The lineage of a type (or class) is a string that gathers the name of the type (class) and, recursively, the lineage of its base type (or base class).

Figure 10 schematically represents the Class Lineage for an LegacyQualityTask class.

In the given hierarchy, the lineage of type LegacyQualityTask is: "Task.QualityTask.LegacyQualityTask.".

The reference to "<EntityLineage>" is used to refer to the lineage at compile time, whereas the reference to "<InstanceLineage>" is used to refer to the lineage at run time of a specific instance. Two different string or nomenclatures may be used to distinguish class (virtual methods) from instances (non-virtual methods).

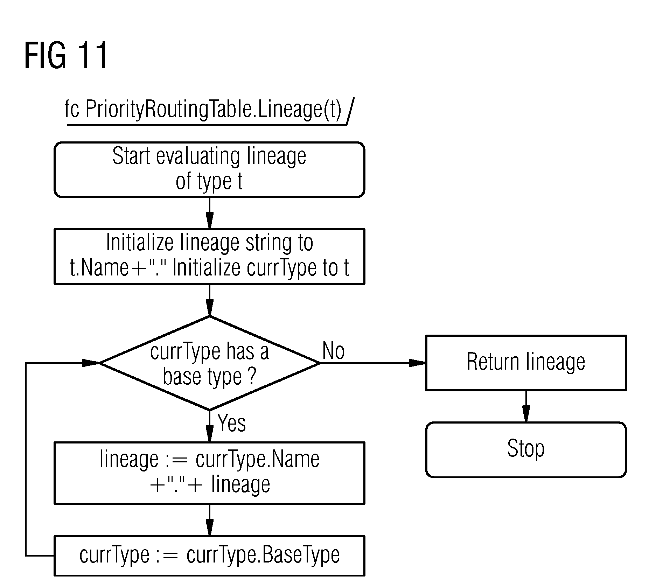

With reference to the diagram block of figure 11, it is schematically given the procedure to start evaluating lineage of a type (in the followings description, type or class are used as synonyms).

The lineage is evaluated when a method is registered into the bus or when the domain delivers a message to the bus as a request of service, including the method name and the class or instance. The evaluation is made in the lower layer constituted by the bus, in order to retrieve the handler of the method to be executed, being the method unknown in the upper layer including the domain making the request.

In the following, some examples of possible implementation of the process are given.

A routing table is stored in the bus.

The touring table can be represented by a simple interface having two functionalities:
- Add functionality, to register a method handler;
- Route functionality, to map a routing key to a method handler.

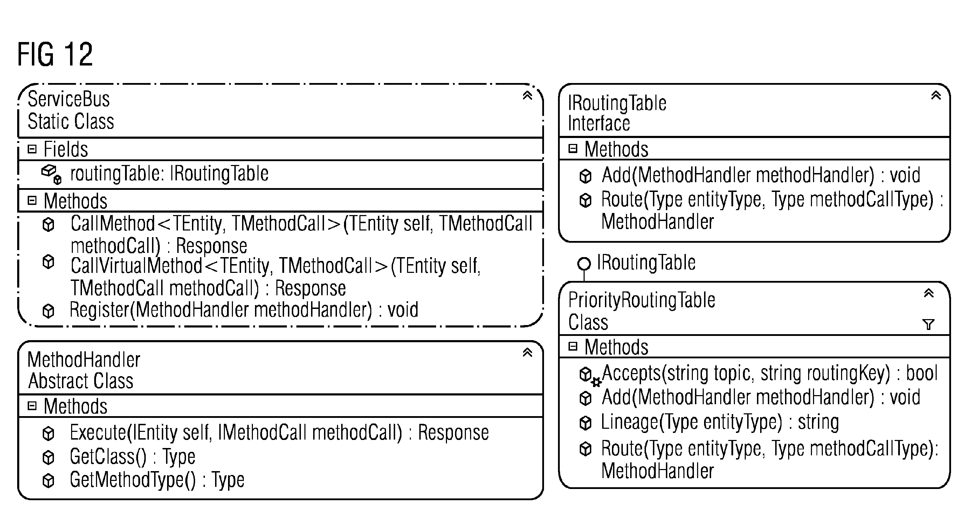

Fig.12 represents a class Diagram for Priority Routing Table. In case of Command/Method routing, any Route function return zero or one handler associated to a routing key that matches the call topic (see below for topic matching and routing key sorting).

The term "topic" relates to a string formed in the lower layer constituted by the bus on the base of a message request delivered from a domain in the upper layer for executing a method, such a request including the name of the method and the corresponding type (or class or instance). Advantageously, the domain of the upper layer is not aware of the method or domain to which the request will be forwarded by the bus; it is the bus that, taking in input the method name and type (or class or instance), construct a topic to be matched with the routing key in the routing table for retrieving the handler of the method.

In the case of the process of present invention, the Route function has the capability to return the handler associated to the first routing key matching the call topic.

The concept of matching a topic with a routing key can be implemented in different ways based on the underlying technologies. For sake of simplicity, the following example makes use of a string comparison with the use of a universal wildcard ("#") but other implementations can be used, considering the actual tool implementing the bus. For instance, commercial software widely adopted, such as *RabbitMQ*, may be used to this purpose.

Regarding the implementations of topic/routing key matching, the following is noted.

The need of matching topics to routing key called for by the process of the invention can be implemented in any way satisfying the requirement to test if a given topic "starts with" a given routing key. For instance, topic "a#" will match any string starting with "a". Besides, different implementations may be used, depending on the underlying technologies, also based on different constraint.

Also the concept of sorting topics according to length can be implemented in different ways based on the underlying technologies. For sake of simplicity, the example given below makes use of a string length sorting, but other measures can be used.

Regarding the implementations of routing key sorting, the following is noted.

The need of sorting routing key called for by the method of the present invention can be implemented in any way satisfying the requirement to test if a given routing key "is deeper than" another routing key. For instance, routing key "a.b.c", consisting in three parts, is deeper than routing keys consisting of fewer parts. Another simple way of implementing depth is length comparison, irrespective of internal structure.

Regarding the implementations of routing the first routing key matching the topic, the following is noted.

The algorithm to support the sorted fetch in the Route function is based on the use of a sorted dictionary. The idea of sorting inherently routing keys to obtain a quicker retrieval at runtime is trivial in the prior art but not necessary. Better ad *hoc* algorithms might be used, if supported by an embedding technology.

The implementation code of the PriorityRoutingTable might be, for instance, in the form:
public void Add(MethodHandler methodHandler)

   ```
 {
     string topic = methodHandler.GetMethodType().Name +
 Lineage(methodHandler.GetClass());
     routingTable.Add(topic, methodHandler);
 }
```
public MethodHandler Route(Type entityType, Type methodCallType)

   ```
 {
     string routingKey = methodCallType.Name + Lineage(entityType);
     KeyValuePair<string, MethodHandler> routingPair =
     routingTable.First(h => Accepts(h.Key, routingKey));
     return routingPair.Value;
 }
```

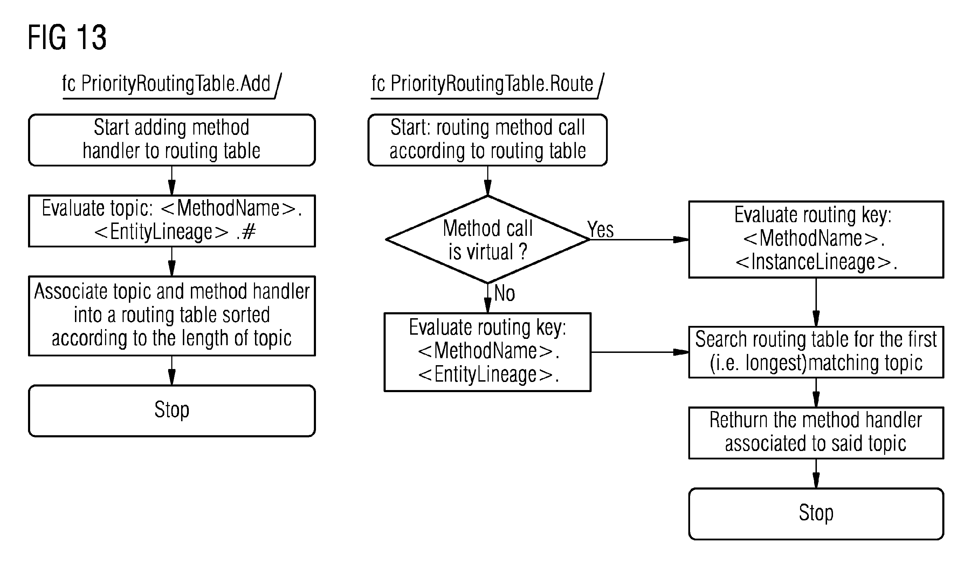

Figure 13 schematically represents the flow Charts for Priority Routing Table.

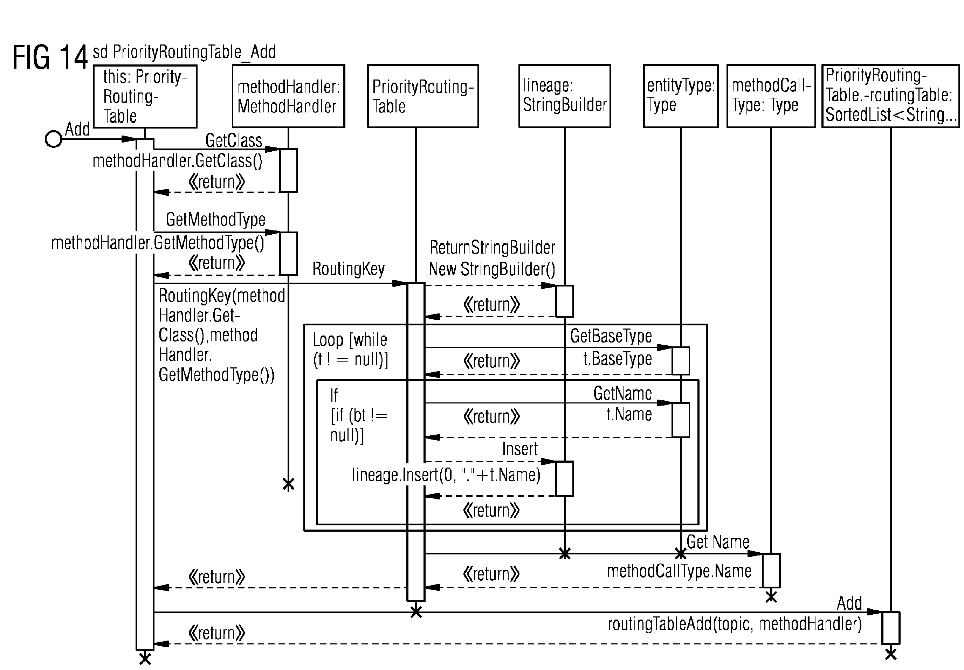

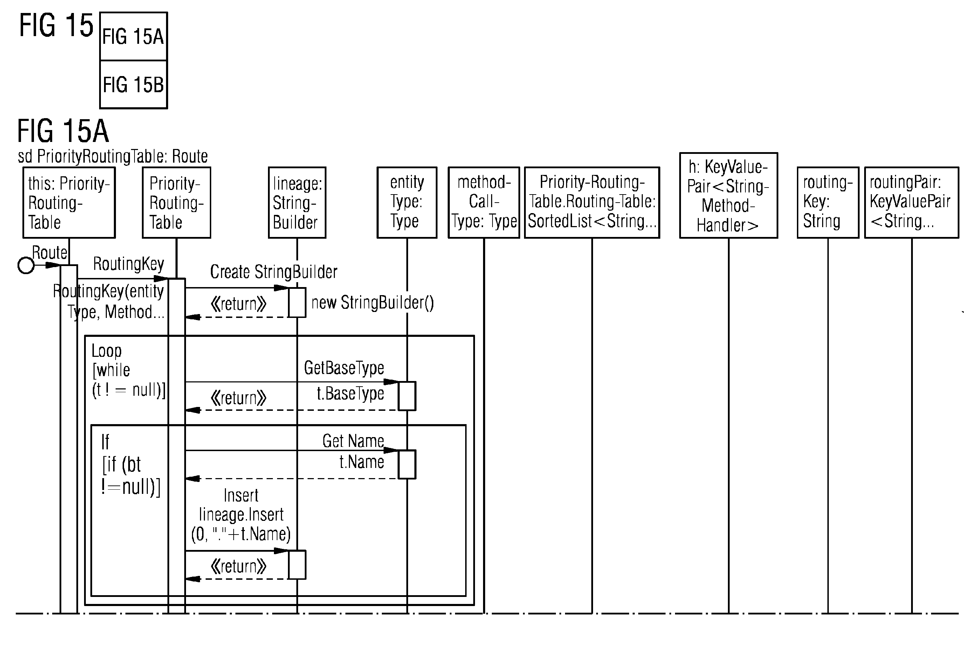

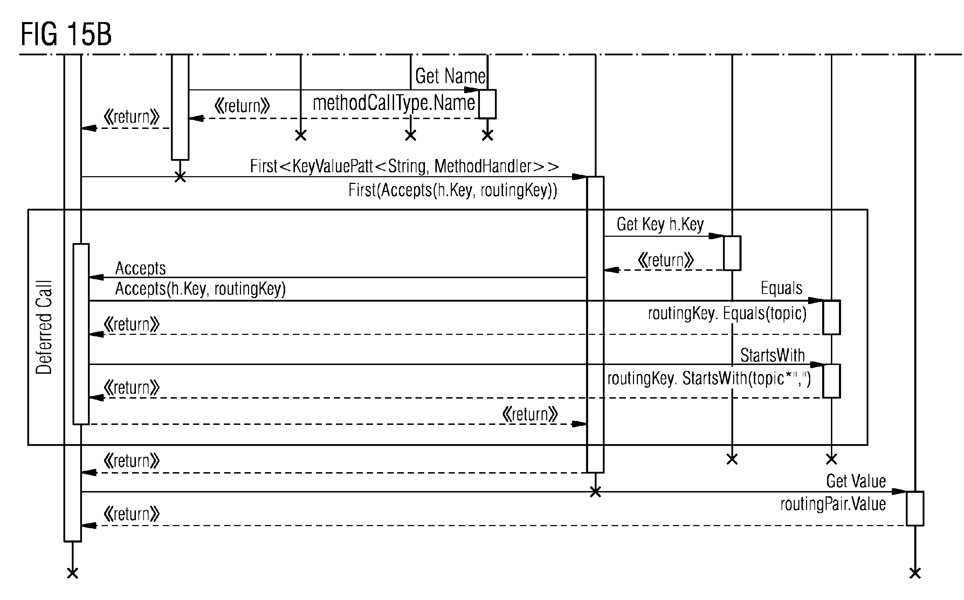

Figure 14 is an exemplification of Sequence Diagrams for Priority Routing Table Add and Figure 15 is an Exemplification of Sequence Diagrams for Priority Routing Table Route.

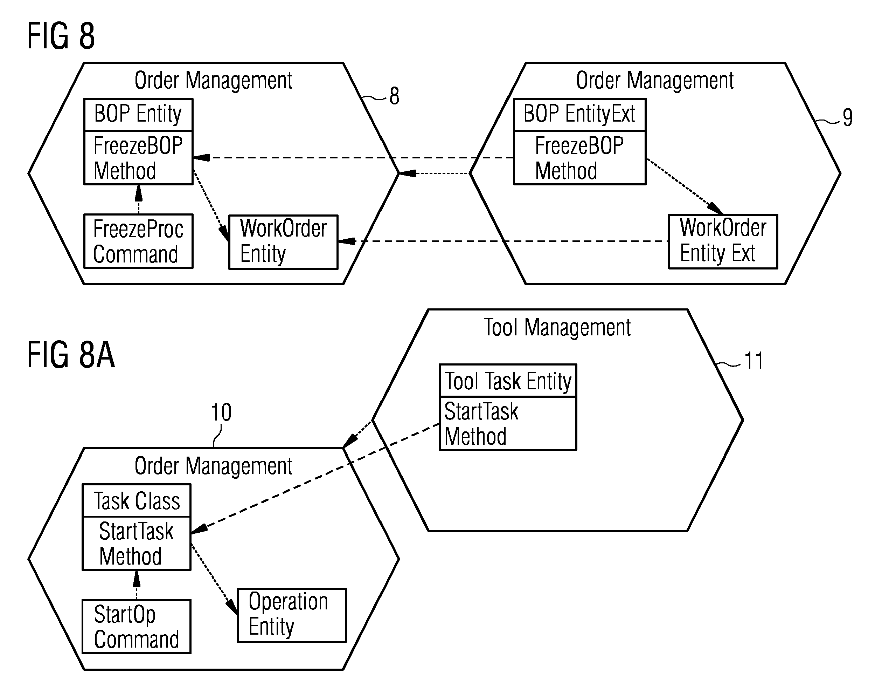

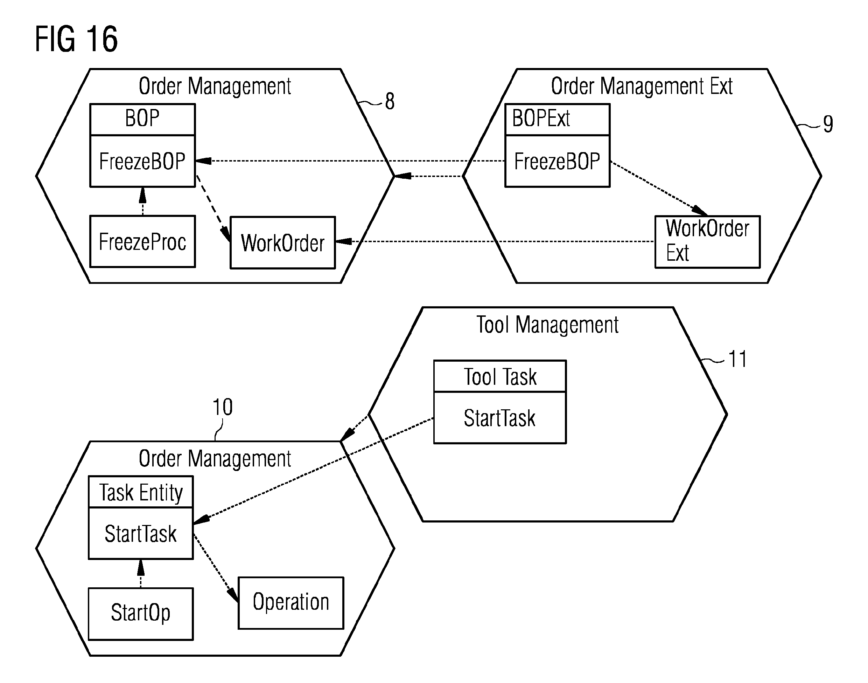

In details, with reference to fig. 8 and 16 (this last being a miniature of figure 8), different cases apply.

In the case of domains 8 and 10 of figure 7:
Method handler will be registered with a topic of the type "<MethodName>.<EntityLineage>.#"
   (where "#" is a wildcard for zero or more characters), such as "FreezeBOP.BOP.#" or "StartTask.Task.#", since BOP and Task are underived classes.
Method calls will be submitted to the bus with a routing key of the type "<MethodName>.<EntityLineage>."
   for virtual calls and "<MethodName>.<InstanceLineage>."
   for non-virtual calls, such as "FreezeBOP.BOP." or "StartTask.Task.", since BOP and Task are underived classes
.

The bus will activate the method handler having the most derived topic (i.e. lexicographically longest) matching (i.e. lexicographically 'starting with') the routing key submitted, for example "StartTask.Task.#" matches "StartTask.Task.".

In the case of Object oriented extensions of domains 9 and 11:
Same behaviors can be exemplified by topics "FreezeBOP.BOP.BOPExt.#" or "StartTask.Task.ToolTask.#", since BOPExt (in domain 9) and ToolTask (in domain 11) are classes derived respectively from BOP and Task.

Same behavior with routing keys such as "FreezeBOP.BOP.BOPExt." when call is performed virtually on an instance of BOPExt or "StartTask.Task.ToolTask." when call is performed virtually on an instance of ToolTask, since BOPExt (in domain 9) and ToolTask (in domain 11) are classes derived respectively from BOP and Task. Same behavior with routing keys such as "FreezeBOP.BOP." when call is performed virtually on an instance of BOP or "StartTask.Task." when call is performed virtually on as instance of Task.

Same behavior with routing keys such as "FreezeBOP.BOP.BOPExt." when call is performed non-virtually on a BOPExt variable or "StartTask.Task.ToolTask." when call is performed non-virtually on a ToolTask variable. Same behavior with routing keys such as "FreezeBOP.BOP." when call is performed non-virtually on a BOP variable or "StartTask.Task." when call is performed non-virtually based on a Task variable.

The bus will activate the method handler having the most derived topic (i.e. lexicographically longest) matching (i.e. lexicographically 'starting with') the routing key submitted, for example "StartTask.Task.ToolTask.#" matches "StartTask.Task.ToolTask." before "StartTask.Task.#".

Here below the advantages of the process of the present invention are summarized.

The process of the present allows to:
- design with Object Oriented Programming the procedure calls (i.e. method calls);
- extend existing classes with Object Oriented Programming;
- modeling according to the object oriented design;
- use a routing procedure integrated in the bus, capable to deliver to the correct procedure handler (i.e. method handler).
- It is possible to leverage the power, simplicity and elegance of virtual methods in a modern architecture based on an object oriented programming and bus architecture. This advantage is apparent with respect to a bus architecture not including virtual methods.
- OOP design:
   The software tool devised in the invention gives the possibility of designing architectures based on a bus with object oriented features, so the software engineer is free to use common or original OOP patterns (for instance, Visitor pattern to implement multiple dispatch).
- Class based dependency update:
   If some methods are not overridden in a derived class, the depending virtual callers (e.g. FreezeProc Command) which make use of new instances will automatically, in any domain, start the new logic contained in the latter version by calling the old method call; dependent code behaviors adapts dynamically.
- Code reuse:
   If the base code (e.g. based on behavior regarding the security constraints, common to the two versions) changes, the code will have to be modified in the base versions: the first call in derived method will usually be that of calling the base method. If Version 1 is not useful anymore, for instance in case of obsolescence, code will still be used in subsequence builds.
- Applicability of Liskov substitution principle (LSP):
   The behavior of virtual calls will be transparent to the developers and analyst: new instances will trigger new behaviors (functionalities); old instances will trigger old behaviors. In case a behavior has not been overridden, calls will still trigger old behaviors. In case a behavior must not depend on runtime instances, non-virtual calls will still be viable.
- Cyclomatic low complexity:
   Since all scenarios require the developer to adjust well identified sections of code, no interlocking between old and new logic is called for.

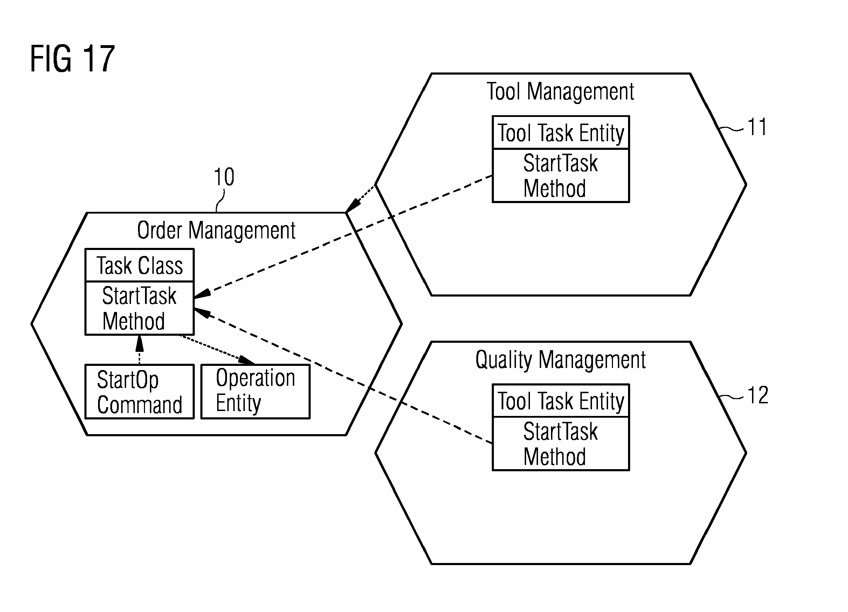

Figure 17 is a schematic representation of the core base domain overridden by two peripheral Object oriented domains.

Further benefits associated to the process of the present invention are:
- Ease to find skill:
   The possibility to leverage on typical OOP features makes easier to find software engineers proficient in the skill, with no need to train in specific design practices.
- Local impacts on development and deploy in case of changes:
   When a behavior changes, there is no need to look for and this can reduce the time to carry out changes and minimize the risk to introduce bugs in the software. It also eases the process of delivering to production environments, since fewer modules will have to be replaced with new versions.
- Code reuse:
   Code reuse can reduce the risk to introduce regression bugs and makes software life cycle easier, resulting in better quality software.
- Backward compatibility:
   Since old instances will automatically show old behavior, backward compatibility is assured with no change in the source code, granting software a longer life span.
- Stable and minimal software:
   Scenarios are stable after each step of software update (the creation of new classes, the creation of new property, the development of new methods, the use of the code), so each modification can be gradual and tested in smaller steps.

The modifications needed are less and the number of classes does not increase exponentially. More compact and easy code is easier to maintain, reducing the risk of regression bugs.

## Claims

1. Process to extend a functionality of a Manufacturing Execution System (MES) in a computer managed Manufacturing Execution System (MES) based on a bus architecture for controlling discrete production lines and/or automotive industries, wherein the MES functionality is implemented in a domain (1) including at least a MES entity with a command, the domain (1) being programmed to communicate to at least another domain (2) of the MES System through a bus of said bus based architecture, **characterized by**:
- selecting the MES entity and command implementing the functionality to be extended;
- transforming the selected commands into a method;
- extending the MES entity and the method which implement the selected functionality, to obtain an extended MES entity and an extended method, corresponding to the extended functionality,
- registering into said bus a first handler of the method, in association with a lineage of the MES entity, and a second handler of the method, in association with a lineage of the extended MES entity, or a lineage of the MES instance instantiated from said MES entity and said extended MES entity;
wherein said communication of said domain with at least another domain through the bus includes delivering from a domain (2) a message on the bus including a name of method and the MES entity or the extended MES entity, or instance derived from the MES entity or the extended MES entity, and wherein
the bus selects the first handler, for executing the functionality, or the second handler, for executing the extended functionality, based on a mapping between the lineage registered in the bus for the first and second handlers, and a lineage derived from said message in the bus.

2. Process according to claim 1, wherein said step of registering into the bus the lineages comprises to store, in association with the first handler, a first string including, through concatenation with a special character, the name of the method and the name of the MES entity, and, in association with the second handler, a second string including, through concatenation with the special character, said name of the method with the name of the MES entity and with the name of the extended MES entity.

3. Process according to claim 1, wherein said step of deriving the lineage from said message in the bus comprises forming a topic string obtained by:
- if said message includes the extended MES entity, deriving the MES entity from the extended MES entity and forming the topic string by concatenating recursively in the bus the name of the MES entity with the name of the extended MES entity and the name of the method;
- if said message includes the MES entity, forming the topic string by concatenating in the bus the name of the MES entity with the name of the method.

4. Process according to claim 1, including the step of further extending one or more time said extended MES entity and said method, to obtain a further extended functionality,
- wherein said step of registering registers a further handler of the method including a lineage of the further extended MES entity or instance instantiated therefrom; and
- wherein said communication is made delivering on the bus the message including the method and the further extended class or instance derived therefrom, and wherein the bus selects the further handler when the lineage registered in the bus for the further handler is mapped to a lineage derived from the message in the bus.

5. Process according to claims 2 and 3, wherein said step of registering the handlers of the method in the bus includes:
- storing the first sting and the second string, as a first and second routing key, in a routing table of said bus;
- mapping the first and second key to the first and second handlers, respectively, and wherein
said step of mapping the lineage registered in the bus for the method and a lineage derived from said message in the bus comprises the step
finding the routing key in the routing table having the longest lexicographic similarity with the topic string.

6. Process according to claim 5, wherein the routing table include at least two interfaces, including:
- an interface "Add functionality" to register an handler of in the routing table;
- an interface "Route functionality" to map a routing key to the handler, wherein the "Route functionality" returns the handler associated to the routing key matching the lineage derived from said message in the bus, by means of the following steps:
- selecting from the routing table all the routing keys starting with letters corresponding to the name of the method in said message;
- among the selected routing keys, finding the deeper routing key, wherein a routing key is deeper than another routing key among the selected routing keys when the routing key includes more MES entities concatenated with said special character than the another routing key, said deeper routing key corresponds to the most extended functionality;
returning the handler associate to the deeper routing key.

7. Process according to claim 1, wherein each of said domain is a domain of a domain driven architecture including a plurality of servers, each server implementing one of said domain and communicating to another server through the bus.

8. Process according to claim 1, wherein each of said domain belong to a first layer of the domain driven architecture and the bus belong to a second layer at a lower level in said domain driven architecture with respect to the first layer, wherein the second layer includes the handlers of the methods and the message is delivered to the bus from the first layer being unaware of the handler.

9. Process according to claim 1, wherein each said MES entity and method are implemented in a class of an object oriented programming language and the instantiated MES entity is an istance instantiated from said class, said communication on the bus is by means of a virtual method, when the message includes the MES entity, or by means of a non-virtual method, when the message includes the instance instantiated from the MES entity.

10. System to extend a functionality of a Manufacturing Execution System (MES) in a computer managed Manufacturing Execution System (MES) based on a bus architecture for controlling discrete production lines and/or automotive industries, wherein the MES functionality is implemented in a domain (1) including at least a MES entity with a command, the domain (1) being programmed to communicate to at least another domain (2) of the MES System through a bus of said bus based architecture, **characterized by** including:
- means to store a method corresponding to a command implementing the functionality to be extended in said MES entity;
- means to store an extended MES entity and an extended method implementing the extended functionality,
- a memory in bus storing a first handler of the method including a lineage of the MES entity and a second handler of the extended method including a lineage of the extended MES entity, or a lineage of the MES instance instantiated from said MES entity and said extended MES entity;
- an input interface of said bus adapted to receive from said domain a message including the method and the corresponding MES entity or extended MES entity, or instance derived therefrom, for driving the communication of the domain with another domain;
- a selector in the bus adapted to select the first handler, for executing the functionality, or the second handler, for executing the extended functionality, based on a mapping between the lineage registered in the bus and a lineage derived from said message in the bus.

11. A computer program element, comprising computer program code for performing steps according to the process of claims 1-9 when loaded in a digital processor of a computing device.

12. A computer program product stored on a computer usable medium, comprising computer readable program code for causing a computing device to perform the process of claims 1-9.
